# EUROPEAN PATENT APPLICATION

(11) **EP 4 797 377 A1**
(43) Date of publication of application: **26.08.2026**
(21) Application number: 25870244.8
(22) Date of filing: 14.07.2025
(51) Int. Cl.: H01M 10/42, H01M 10/48

(54) **HIGH-VOLTAGE BOX CONTROL APPARATUS AND METHOD**

(30) Priority: 30.09.2024 CN 202411389254
(71) Applicant: Zhongtian Energy Storage Technology Co., Ltd, Nantong, Jiangsu 226000 (CN); Jiangsu Zhongtian Technology Co., Ltd., Nantong, Jiangsu 226463 (CN)
(72) Inventor: PENG, Chenhui, Nantong, Jiangsu 226000 (CN); ZHAO, Jing, Nantong, Jiangsu 226000 (CN); MIAO, Yonghua, Nantong, Jiangsu 226000 (CN); FAN, Hongjun, Nantong, Jiangsu 226000 (CN); ZHAO, Weijie, Nantong, Jiangsu 226000 (CN); NI, Jiayan, Nantong, Jiangsu 226000 (CN); LU, Qingqing, Nantong, Jiangsu 226000 (CN); ZHAO, Lei, Nantong, Jiangsu 226000 (CN); ZHANG, Chao, Nantong, Jiangsu 226000 (CN); SHI, Ruixiang, Nantong, Jiangsu 226000 (CN); SU, Ting, Nantong, Jiangsu 226000 (CN)
(74) Representative: Lanchava, Bakuri
(86) International application number: PCT/CN2025/108416
(87) International publication number: WO 2026/066529

(57) **Abstract**

Provided in the present application are a high-voltage box control apparatus and method, the apparatus comprising a first Hall sensor, a second Hall sensor and a control module. The first Hall sensor is separately connected to the control module and a battery cluster main circuit of the high-voltage box, and is used for sending to the control module an acquired first current value of the battery cluster main circuit. The second Hall sensor is separately connected to the control module and the battery cluster main circuit, and is used for sending to the control module an acquired second current value of the battery cluster main circuit. The control module is used for executing on-off operations on the high-voltage box on the basis of the first current value and the second current value. The present technical solution reduces the problem of damage to high-voltage boxes caused by inaccurate current acquisition or faults of current acquisition apparatuses.

## Description

### Technical Field

The present invention relates to the technical field of energy storage, particularly relates to high-voltage box control apparatus and method.

### Background Art

High-voltage box, which is a management unit for the main electrical circuit of battery cluster, provides a function of monitoring status of the battery cluster for the energy storage system. Current collection and detection is an important section of the high-voltage box for managing charge and discharge of the battery cluster, and plays a decisive role in aspects such as safe use and service life extension when the energy storage battery packs are used in groups.

The main electrical circuit of the high-voltage box in the prior art mainly uses a single shunt or a single Hall sensor to collect the current of the battery cluster, completing the function of monitoring battery cluster's status for the energy storage system.

However, the above-mentioned main electrical circuit of the high-voltage box has a relatively low operational safety.

### Summary of the Invention

The present application provides a high-voltage box control apparatus and method, so as to solve the problem that the main electrical circuit of the conventional high-voltage box has a relatively low operational safety.

In a first aspect, the present application provides a high-voltage box control apparatus, comprising:
A first Hall sensor, a second Hall sensor, and a control module;
The first Hall sensor is connected to the control module and a battery cluster main circuit of the high-voltage box, respectively, and is configured for sending a first current value collected from the battery cluster main circuit to the control module;
The second Hall sensor is connected to the control module and the battery cluster main circuit, respectively, and is configured for sending a second current value collected from the battery cluster main circuit to the control module;
The control module is configured to switch on/off the high-voltage box based on the first current value and the second current value.

Optionally, the control module is specifically used for:
Calculating a current difference between the first current value and the second current value;
Controlling a circuit breaker in the battery cluster main circuit to be in an on state if the current difference is less than or equal to a preset current difference;
Switching the circuit breaker off if the current difference is greater than the preset current difference.

Optionally, if the current difference is greater than the preset current difference, the control module is further used for:
Outputting abnormal alarm information, which is used to indicate that the first Hall sensor and/or the second Hall sensor are damaged.

Optionally, if the current difference is less than or equal to the preset current difference, the control module is further used for:
Determining a target current value collected by a target Hall sensor as the current of the battery cluster main circuit, wherein the target Hall sensor is the one with higher accuracy among the first Hall sensor and the second Hall sensor.

Optionally, the control module is also connected to a pre-charge sub-circuit in the battery cluster main circuit to control the on/off of the pre-charge sub-circuit.

Optionally, the high-voltage box control apparatus further includes a DC power conversion module, which is connected to the battery cluster main circuit and the control module respectively.

In a second aspect, the present application provides a high-voltage box control method, which is applied to the control module of the high-voltage box control apparatus in the first aspect and comprises:
Obtaining a first current value of the battery cluster main circuit of the high-voltage box collected by a first Hall sensor and a second current value of the battery cluster main circuit collected by the second Hall sensor;
Switching on/off the high-voltage box based on the first current value and the second current value.

Optionally, the step of switching on/off the high-voltage box based on the first current value and the second current value comprises:
Calculating a current difference between the first current value and the second current value;
Controlling a circuit breaker in the battery cluster main circuit to be in an on state if the current difference is less than or equal to a preset current difference;
Switching the circuit breaker off if the current difference is greater than the preset current difference .

Optionally, if the current difference is greater than the preset current difference, the method further comprises:
Outputting abnormal alarm information, which is used to indicate that the first Hall sensor and/or the second Hall sensor are damaged.

Optionally, if the current difference is less than or equal to the preset current difference, the control module is further used for:
Determining a target current value corresponding to a target Hall sensor as the current of the battery cluster main circuit, wherein the target Hall sensor is the one with higher accuracy among the first Hall sensor and the second Hall sensor.

### Beneficial Effects

The high-voltage box control apparatus and method provided by the present application comprise a first Hall sensor, a second Hall sensor and a control module. The first Hall sensor is connected to the control module and a battery cluster main circuit of the high-voltage box, respectively, and is configured for sending a first current value collected from the battery cluster main circuit to the control module; the second Hall sensor is connected to the control module and the battery cluster main circuit, respectively, and is configured for sending a second current value collected from the battery cluster main circuit to the control module; the control module is configured to switch on/off the high-voltage box based on the first current value and the second current value. The present technical solution provides two Hall sensors for respectively collecting current in the battery cluster main circuit of the high-voltage box and one control module for calculating current difference between two sets of current values respectively, so as to determine the operational state of the Hall sensor and then set corresponding control instructions to control the on/off of the high-voltage box, thereby realizing effective detection of Hall sensors, reducing the problem of causing damage to the high-voltage box due to inaccurate current collection, and improving the operational safety of the circuit of the high-voltage box.

### Description of Drawings

The accompanying drawings herein, which are incorporated into the specification and form a part of the specification, illustrate examples in accordance with the present application and are used together with the specification to explain the principles of the present application.
FIG. 1 is a schematic structural diagram of the high-voltage box control apparatus provided in the example of the present application;
FIG. 2 is another schematic structural diagram of the high-voltage box control apparatus provided in the example of the present application; and
FIG. 3 is a schematic flow diagram of the high-voltage box control method provided in the example of the present application.

Reference numerals:
100 - high-voltage box control apparatus;
110 - main positive circuit; 111 - first fuse; 112 - main positive relay;
120 - main negative circuit; 121 - second fuse; 122 - first Hall sensor; 123 - main negative relay; 124 - second Hall sensor;
130 - pre-charge sub-circuit; 131 - pre-charge resistor; 132 - pre-charge relay;
140 - circuit breaker;
150 - control module;
160 - DC power conversion module.

The above-mentioned accompanying drawings have illustrated specific embodiments of the present application, which will be further described in detail. These drawings and literal description are intended to explain concepts of the present application to those skilled in the art with reference to specific embodiments, rather than limit the scope of concepts of the present application in any way.

### Embodiments

Here, exemplary embodiments will be described in detail, and their examples are shown in the accompanying drawings. When the drawings are mentioned in the following description, unless otherwise indicated, the same numbers in different drawings represent the same or similar elements. Embodiments described in the exemplary embodiments do not represent all embodiments consistent with the present application. On the contrary, they are only examples of apparatus and method that are detailed in appended claims and consistent with some aspects of the present application.

In the prior art, when it is required to collect current from the main electrical circuit of high-voltage box, a single shunt or a single Hall sensor is usually used to collect the current of the battery cluster in the high-voltage box. However, once the Hall sensor or the shunt fails, the reliability of current collection cannot be guaranteed and on/off operations on the high-voltage box cannot be performed in real time based on the Hall sensor or the shunt, so it is impossible to effectively adjust the working state of the high-voltage box to adapt to the real-time operating conditions of the battery cluster.

In view of the above technical problems, the inventor has realized that a single sensor encountering component failures cannot provide accurate current data and cannot provide efficient and reliable control instructions to ensure the operation of the system. In view of this, the inventor, on the basis of in-depth analysis and research of the above technical problems, contemplates designing a technical solution of dual collection of current values, which provides a cross validation method with the dual-collected current values, and autonomously generates corresponding control instructions to switch on/off the high-voltage box based on the dual-collected current values, so as to achieve rapid system response and avoid problems caused by abnormal current such as damage of the high-voltage box.

Hereunder the technical solutions of the present application and how to solve the above technical problems with the technical solution of the present application are described in detail through specific embodiments. The following several specific embodiments can be combined with each other, and the same or similar concepts or processes may not be repeated in some embodiments. Hereunder embodiments of the present application will be described in conjunction with the accompanying drawings.

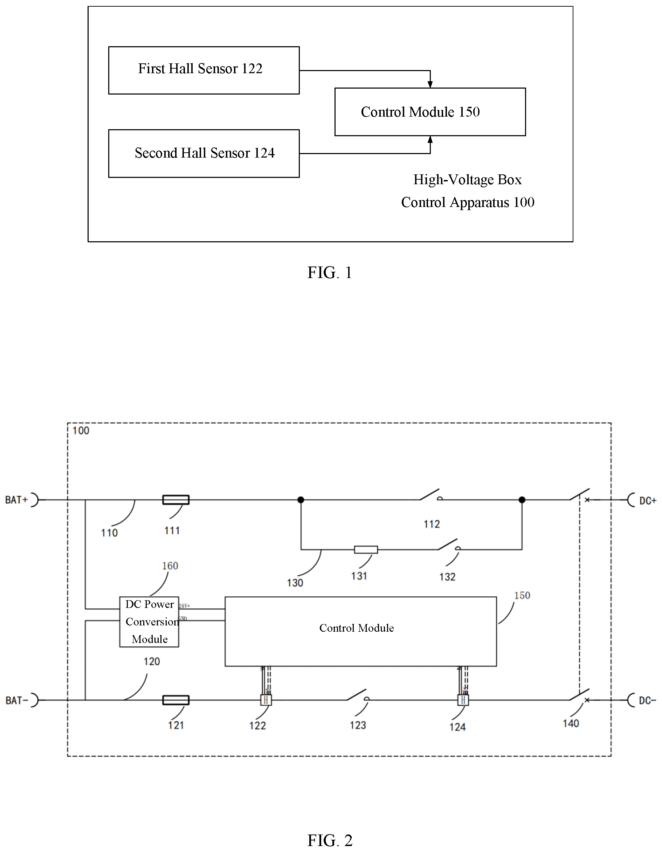

FIG. 1 is a schematic structural diagram of the high-voltage box control apparatus provided in an example of the present application. As shown in FIG. 1, the high-voltage box control apparatus 100 comprises:
A first Hall sensor 122, a second Hall sensor 124, and a control module 150;
The first Hall sensor 122 is connected to the control module 150 and a battery cluster main circuit of the high-voltage box, respectively, and is configured for sending a first current value collected from the battery cluster main circuit to the control module 150;
The second Hall sensor 124 is connected to the control module 150 and the battery cluster main circuit, respectively, and is configured for sending a second current value collected from the battery cluster main circuit to the control module 150;
The control module 150 is configured to switch on/off the high-voltage box based on the first current value and the second current value.

Wherein, the high-voltage box refers to a high-voltage junction box or a high-voltage distribution box, which is a key component used in energy storage systems. The high-voltage box can manage the high voltage output from the battery energy storage system to ensure that the voltage operates within a safe range, preventing excessively high or low voltage, and thereby protecting the battery clusters and other electrical elements in the energy storage system.

The Hall current sensor is a sensor made based on the Hall effect, which can be used to detect and measure the current in the circuit, facilitating the operation monitoring of energy storage system and ensuring the normal operation of the system. Through Hall sensors, current changes in the energy storage battery cluster can be monitored in real time, and abnormal conditions, such as overload and short circuit, during the charge/discharge process of the system can be detected timely, so as to take corresponding measures for protection.

The control module 150 is configured to receive current data from two Hall sensors. The control module 150 has a built-in algorithm to compare the two current values and instruct the high-voltage box to switch on/off based on a current difference obtained through comparison, so as to protect the system from possible damage caused by current overload or short circuit.

FIG. 2 is another schematic structural diagram of the high-voltage box control apparatus provided in an example of the present application. As shown in FIG. 2, the battery cluster main circuit mainly includes a main positive circuit 110 and a main negative circuit 120, the main positive circuit 110 includes a first fuse 111 and a first positive relay 112, the main negative circuit 120 includes a second fuse 121, a first Hall current sensor 122, a main negative relay 123 and a second Hall current sensor 124.

Wherein, the relay mainly plays a role in controlling the circuit's on/off and safety protection. The fuses are mainly used to cut off the circuit and protect components from being damaged by melting themselves during short circuit in the circuit. The circuit breaker 140 is mainly used to connect/disconnect load circuits and cut off faulty circuits, prevent accidents from escalating, ensure safe allowance, and has the functions of short circuit and overload protection.

Optionally, the control module 150 is specifically used for:
Calculating a current difference between the first current value and the second current value;
Controlling the circuit breaker 140 in the battery cluster main circuit to be in an on state if the current difference is less than or equal to a preset current difference;
Switching the circuit breaker 140 off if the current difference is greater than the preset current difference.

Wherein, the preset current difference is preset according to the design safety standards of the system, and is used to define the normal fluctuation range of current readings. Specifically, the control module 150 first receives current values from the first Hall sensor 122 and the second Hall sensor 124. The built-in processor of the control module 150 compares these two current values, calculates the difference between them, and obtains the current difference. Then the control module 150 compares the calculated current difference with the preset current difference. If the current difference is greater than the preset current difference, the control module 150 determines that there is an abnormality, and the Hall sensor might have a fault that causes the abnormality in current detection. At this time, in order to prevent potential equipment damage, the control module 150 will issue a signal to instruct the circuit breaker 140 to switch to the off state and then control to cut off the main positive relay 112 and the main negative relay 123, so that the power supply can be immediately cut off to prevent further development of the accident.

Optionally, if the current difference is greater than the preset current difference, the control module 150 is further configured for:
Outputting abnormal alarm information, which is used to indicate that the first Hall sensor 122 and/or the second Hall sensor 124 are damaged.

Wherein, while determining that the current difference is abnormal, the control module 150 activates its alarm output function, specifically the control module generates specific abnormal alarm information to explain in detail the nature of the abnormality and the possible involved devices, such as indicating "the first Hall sensor 122 may be damaged" or "the second Hall sensor 124 has an abnormal reading". In addition, in one implementable approach, the abnormal alarm information can be delivered to system operator or maintenance team through various ways, including but not limited to visual or audible alarms, electronic messages sent to the central monitoring system, or direct display on the control panel.

Optionally, if the current difference is less than or equal to the preset current difference, the control module 150 is also configured for:
Determining a target current value collected by the target Hall sensor as the current of the battery cluster main circuit, wherein the target Hall sensor is the one with higher accuracy among the first Hall sensor 122 and the second Hall sensor 124.

Wherein, if the comparison result of current values indicates that the current difference is less than the preset current difference, it is determined that the circuit is now running normally without overload or short circuit. In this case, the control module 150 sends instructions to the circuit breaker 140 to keep it in an on state, allowing the current to flow normally. In addition, in this case, the control module 150 needs to further analyze the accuracy of the two Hall sensors and identify the sensor with higher accuracy. In an implementable approach, the first Hall sensor 122 is a high-precision CAN (Controller Area Network) Hall sensor, which is generally considered to have an accuracy higher than that of the second Hall sensor 124. The control module 150 determines the current value collected by the first Hall sensor 122 (high-precision sensor) as the actual current value of the battery cluster main circuit, because the data provided by high-precision sensor is more reliable and accurate, and is more suitable for use as a benchmark for system operation. For example, the first Hall sensor 122 can be a high-precision CAN Hall sensor 122, and the second Hall sensor 124 can be an ordinary Hall sensor. The high-precision CAN Hall sensor 122 can communicate with the main control unit of the battery management system through CAN_H and CAN_L, and upload the current information collected from the main circuit. The ordinary Hall sensor can communicate with the main control unit of the battery management system through HALL_1 and HALL_2.

Optionally, the control module 150 is also connected to the pre-charge sub-circuit 130 in the battery cluster main circuit, and is configured for controlling the on/off of the pre-charge sub-circuit 130.

Wherein, the pre-charge sub-circuit 130 is set to pre-charge the battery cluster before connecting the battery cluster to the main power supply or the load, so as to prevent damage that is caused by sudden change of voltage when the battery cluster is directly connected. The pre-charge sub-circuit 130 includes a pre-charge resistor 131 and a pre-charge relay 132, the pre-charge resistor 131 is mainly used to limit the current, and the voltage of battery cluster is adjusted through the pre-charge sub-circuit 130. At the same time, due to the presence of the pre-charge resistor 131, excessive circulating current between battery clusters is avoided.

Specifically, before the battery cluster is connected to the main power supply or load, the control module 150 determines the matching degree between the voltage of battery cluster and the voltage of system. If the voltage difference is greater than the safety threshold, the control module 150 will instruct the pre-charge relay 132 to close and start the pre-charging process. During the pre-charging process, the current slowly increases through the pre-charge resistor 131 until the voltage of battery cluster gradually approaches the voltage of system. At the same time, the control module 150 continuously monitors the voltage changes and instructs the pre-charge relay 132 to disconnect when the voltage reaches the preset level, thus completing the pre-charging process.

Optionally, the high-voltage box control apparatus 100 further includes a DC power conversion module 160, and the DC power conversion module 160 is connected to the battery cluster main circuit and the control module 150, respectively.

Wherein, the main function of the DC power conversion module 160 is to convert the higher voltage current from the battery cluster main circuit into a lower voltage suitable for use by the control module 150 and other low-voltage devices. This usually involves converting high-voltage direct current, such as 1,500 VDC, to a lower voltage, such as 24 VDC or 12 VDC. This conversion ensures that the control module 150 and other sensitive electronic devices can operate at a safe and appropriate voltage level, thereby avoiding damage caused by high voltage.

Specifically, the DC power conversion module 160 is directly connected to the battery cluster main circuit to obtain required input power from the battery cluster, ensuring that the module can directly draw electrical energy from the battery cluster main circuit for conversion. At the same time, the output terminal of the conversion module is connected to the control module 150, providing stable and reliable power supply to the control module 150, enabling it to continuously and effectively perform its functions. Additionally, in one implementable approach, the operational status of the DC power conversion module 160 can be monitored by the control module 150, so as to ensure that all electrical components operate within preset voltage and current parameters.

The high-voltage box control apparatus 100 provided in examples of the present application significantly improves the accuracy of current monitoring and the response capability of the system by integrating a dual Hall sensor system and an advanced control module 150. A high-precision Hall sensor and an ordinary precision sensor are used for current detection and a current difference is determined through comparing current values of the two sensors, so that the control module 150 can select the data from the high-precision sensor as the accurate current value of the battery cluster main circuit within the safe range of the current difference, thus the efficiency, safety, and reliability of the entire system is effectively improved and is suitable for energy storage system environments with strict requirements.

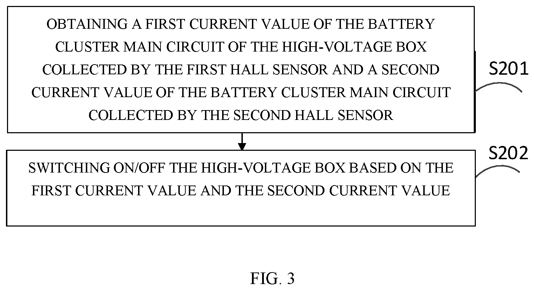

FIG. 3 is a schematic flow diagram of the high-voltage box control method provided in an example of the present application. As shown in FIG. 3, the method is applied to the control module 150 of the high-voltage box control apparatus 100 shown in FIG. 1 and comprises:
S201: obtaining a first current value of the battery cluster main circuit of the high-voltage box collected by the first Hall sensor 122, and a second current value of the battery cluster main circuit collected by the second Hall sensor 124.

Wherein the first Hall sensor 122 and the second Hall sensor 124 include one high-precision CAN Hall sensor and one ordinary Hall sensor, each of which is connected to the control module 150 and can be connected through wired manner. Specifically, the first Hall sensor 122 and the second Hall sensor 124 are respectively connected to the battery cluster main circuit of the high-voltage box for monitoring current conditions in real time. In addition, the Hall sensor works based on Hall effect, that is, when a charged conductor, such as an electric wire, is placed in a magnetic field, the charges in the conductor will shift under the action of Lorentz force to form a Hall voltage in the transverse direction of the conductor, and this voltage is proportional to the current passing through the conductor. That is to say, in the high-voltage box control apparatus 100, the Hall sensor is placed near the main positive circuit 110 and the main negative circuit 120, without directly contacting the wire, and the Hall chip will generate a corresponding Hall voltage based on the sensed magnetic field strength, and this voltage is a direct representation of the current magnitude, namely the first current value and the second current value in this example of the present application.

S202: switching on/off the high-voltage box based on the first current value and the second current value.

Wherein, the control module 150 first receives the first current value and the second current value, and then detects whether abnormal current exists in the circuits of the high-voltage box through comparing the two values. In addition, it should be noted that, before any switching on/off operation, the control module 150 will make multiple checks to confirm that all security protocols are followed and ensure the safety of the operation. Among them, the control module 150 can monitor the operating status of the system in real time based on the current data received from the Hall sensor, ensuring that the current runs within a safe range, and respond quickly to any abnormal situations, such as adjust loads, disconnect circuits, etc., to ensure the safe and stable operation of the system.

Optionally, switching on/off the high-voltage box based on the first current value and the second current value comprises:
Calculating the current difference between the first current value and the second current value;
Controlling the circuit breaker 140 in the battery cluster main circuit to be in an on state if the current difference is less than or equal to the preset current difference;
Switching the circuit breaker 140 off if the current difference is greater than the preset current difference.

Wherein, the control module 150 receives the first current value and the second current value in the battery cluster main circuit from the first Hall sensor 122 and the second Hall sensor 124, then calculates the difference between these two current values to obtain the current difference, and then compares this current difference with the preset current difference threshold to determine whether the present current state is normal, wherein the preset current difference threshold is mainly determined based on system design and safety requirements. For example, when the preset current difference threshold is 20A, then when the difference of currents sampled by the two Hall sensors is within the allowable range, it will be determined that the Hall current sensor is working normally, and the sampling value of the high-precision CAN Hall sensor will be used as the output value. This method can ensure the accuracy of current collection of the energy storage battery cluster through verification. However, when the current difference detected by the two Hall sensors is too large and exceeds the preset value of 20A, it is determined that the Hall current sensor is working abnormally, an alarm indicating abnormity of the Hall current sensor will be issued to cut off the high-voltage box circuit breaker 140 and then cut off the main positive relay 112 and the main negative relay 123, thus achieving fault detection of the Hall sensor and ensuring safe and reliable operation of the energy storage system. Specifically, when abnormal current is detected, the control module 150 will control to disconnect the circuit breaker 140, cut off current supply to main positive circuit 110 and main negative circuit 120, and then cut off the main positive relay 112 and the main negative relay 123 to further prevent expansion of faults and protect batteries and other critical equipment from being damaged. In addition, it should be noted that when the high-voltage box needs to be closed or enter maintenance mode under normal operation, the control module 150 will first control the system to reduce power, gradually reduce the current inside the high-voltage box, and disconnect the main positive relay 112 and the main negative relay 123 after the current drops to zero, safely placing the circuits in the high-voltage box in a non-active state. When all currents are completely disconnected, the control module 150 will perform a status check to confirm that all electrical components have been safely disconnected, ensuring that there is no residual current or voltage.

Optionally, if the current difference is greater than the preset current difference, the method further comprises:
Outputting abnormal alarm information, which is configured for indicating that the first Hall sensor 122 and/or the second Hall sensor 124 are damaged.

Wherein, when the calculated current difference exceeds the preset threshold, the control module 150 will trigger a safety response process. Specifically, if the current difference is abnormal, indicating that one or two sensors are damaged or have measurement errors, at this time, the control module 150 will generate abnormal alarm information, which specifically indicates possible fault situations, such as "the first Hall sensor 122 may be damaged" or "the second Hall sensor 124 is measuring abnormally", wherein, once the abnormal alarm information is output, the system may take further protective measures, including but not limited to immediately disconnecting the power supply to protect the system from being further damaged. In addition, after a fault occurs, the system will record all associated event data, including current values, alarm times, response measures, etc., in the system log for use in subsequent analysis and fault diagnosis.

Optionally, if the current difference is less than or equal to the preset current difference, the control module 150 is further configured for:
Determining the target current value corresponding to the target Hall sensor as the current of the battery cluster main circuit, wherein the target Hall sensor is the one with higher accuracy among the first Hall sensor 122 and the second Hall sensor 124.

Wherein, the target Hall sensor is a high-precision sensor, and the high-precision CAN Hall sensor communicates with the control module 150 through the CAN bus. Ordinary Hall sensor communicates with the control module 150 through simple analog or digital signal interfaces, such as HALL_1 and HALL_2. In one implementable approach, current data is sent in real-time to the control module 150 through a pre-set communication interface. After receiving this data, the control module 150 performs further analysis and processing, such as current monitoring, fault detection, and system control.

The high-voltage box control method provided in the example of the present application provides an efficient and safe way to manage the current status of battery clusters through precise current monitoring and intelligent on/off operations, ensuring that the control module can make rapid responses based on real-time data, thereby maintaining the efficient operation of the system while protecting the safety of the battery and the system, significantly improving the reliability of the high-voltage box and the overall safety of the system.

Those skilled in the art will readily envisage some other embodiments of the present application after considering the specification and practicing the invention disclosed herein. The present application is intended to cover any variants, uses or adaptive changes of the present application, which follow the general principles of the present application and include common general knowledge or routine technical means in the art that are not disclosed in the present application. The specification and examples are only considered as exemplary, and the true scope and spirit of the present application are indicated by the appended claims.

It should be noted that in order to simplify the description, the aforementioned method embodiments are all described as a series of action combinations. However, those skilled in the art should be aware that the present application is not limited by the order of the described actions, as some steps may be performed in other orders or simultaneously according to the present application. Secondly, those skilled in the art should also be aware that the embodiments described in the specification are optional embodiments, and the involved actions and modules are not necessarily necessary for the present application.

In the above embodiments, the description of each example has its own emphasis, and the parts that are not detailed in some embodiments can be seen by referring to the relevant description in other embodiments. The various technical features of the above embodiments can be combined arbitrarily. In order to make the description concise, not all possible combinations of the various technical features in the above embodiments have been described. However, as long as there is no contradiction in the combination of these technical features, they should be considered as falling within the scope of this specification.

It should be understood that the present application is not limited to the precise structures that have been described above and shown in the accompanying drawings, and various modifications and changes can be made without departing from its scope. The scope of the present application is limited only by the appended claims.

## Claims

1. A high-voltage box control apparatus, **characterized in that** the control apparatus comprises:
a first Hall sensor, a second Hall sensor, and a control module;
the first Hall sensor is connected to the control module and a battery cluster main circuit of the high-voltage box, respectively, and is configured for sending a first current value collected from the battery cluster main circuit to the control module;
the second Hall sensor is connected to the control module and the battery cluster main circuit, respectively, and is configured for sending a second current value collected from the battery cluster main circuit to the control module;
the control module is configured to switch on/off the high-voltage box based on the first current value and the second current value.

2. The apparatus according to claim 1, **characterized in that** the control module is specifically configured for:
calculating a current difference between the first current value and the second current value;
controlling a circuit breaker in the battery cluster main circuit to be in an on state if the current difference is less than or equal to a preset current difference;
switching the circuit breaker off if the current difference is greater than the preset current difference.

3. The apparatus according to claim 2, **characterized in that**, if the current difference is greater than the preset current difference, the control module is further configured for:
outputting abnormal alarm information, which is used to indicate that the first Hall sensor and/or the second Hall sensor are damaged.

4. The apparatus according to claim 2 or claim 3, **characterized in that**, if the current difference is less than or equal to the preset current difference, the control module is further configured for: determining a target current value collected by a target Hall sensor as the current of the battery cluster main circuit, wherein the target Hall sensor is the one with higher accuracy among the first Hall sensor and the second Hall sensor.

5. The apparatus according to claim 2 or claim 3, **characterized in that** the control module is also connected to a pre-charge sub-circuit in the battery cluster main circuit to control on/off of the pre-charge sub-circuit.

6. The apparatus according to any of claims 1-3, **characterized in that** the high-voltage box control apparatus further includes a DC power conversion module, which is connected to the battery cluster main circuit and the control module respectively.

7. A high-voltage box control method, **characterized in that** the control method is applied to the control module in the high-voltage box control apparatus according to any of claims 1-6 and the control method comprises:
obtaining a first current value of the battery cluster main circuit of the high-voltage box collected by a first Hall sensor and a second current value of the battery cluster main circuit collected by the second Hall sensor;
switching on/off the high-voltage box based on the first current value and the second current value.

8. The method according to claim 7, **characterized in that** the step of switching on/off the high-voltage box based on the first current value and the second current value comprises:
calculating a current difference between the first current value and the second current value;
controlling a circuit breaker in the battery cluster main circuit to be in an on state if the current difference is less than or equal to a preset current difference;
switching the circuit breaker off if the current difference is greater than the preset current difference.

9. The method according to claim 8, **characterized in that**, if the current difference is greater than the preset current difference, the method further comprises:
outputting abnormal alarm information, which is used to indicate that the first Hall sensor and/or the second Hall sensor are damaged.

10. The method according to claim 8 or claim 9, **characterized in that**, if the current difference is less than or equal to the preset current difference, the control module is further configured for: determining a target current value corresponding to a target Hall sensor as the current of the battery cluster main circuit, wherein the target Hall sensor is the one with higher accuracy among the first Hall sensor and the second Hall sensor.
